(19) Europäisches Patentamt
European Patent Office
Office européen des brevets

(11) EP 0 662 478 B1

# (12) EUROPÄISCHE PATENTSCHRIFT

(45) Veröffentlichungstag und Bekanntmachung des Hinweises auf die Patenterteilung:
**17.05.2000 Patentblatt 2000/20**

(51) Int. Cl.$^7$: **C07F 5/02**

(21) Anmeldenummer: **95100051.2**

(22) Anmeldetag: **03.01.1995**

## (54) Verfahren zur Isolierung von Tetraphenylboraten

Process for isolating tetraphenyl borates

Procédé d'isolation de tétraphényl borates

(84) Benannte Vertragsstaaten:
**CH DE FR GB LI**

(30) Priorität: **11.01.1994 DE 4400543**

(43) Veröffentlichungstag der Anmeldung:
**12.07.1995 Patentblatt 1995/28**

(73) Patentinhaber: **Clariant GmbH
65929 Frankfurt am Main (DE)**

(72) Erfinder:
- **Baur, Rüdiger, Dr.
D-65817 Eppstein (DE)**
- **Fuchs, Hermann, Dr.
D-61462 Königstein (DE)**
- **Macholdt, Hans-Tobias, Dr.
D-64297 Darmstadt (JP)**
- **Gitzel, Jörg, Dr.
Tokyo 142 (JP)**
- **Theiss, Wilfried
D-65439 Flörsheim (DE)**

(56) Entgegenhaltungen:
**DE-A- 2 729 193**
**FR-A- 1 414 256**
**US-A- 5 078 974**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 662 478 B1

**Beschreibung**

Die vorliegende Erfindung betrifft ein verbessertes Verfahren zur Isolierung von salzartigen Tetraphenylborat-Feststoffen in technischer Qualität.

Tetraphenylborate, insbesondere in Form ihrer Alkalisalze, gewinnen zunehmend an technischer Bedeutung. Bekannt ist deren Verwendung in der Gesundheits-und Kosmetikindustrie als Antitranspirant (US-A-3 726 968), als antiseptisches Fungizid in schmutzabweisenden Anstrichfarben (EP-A-0 153 885), als Dekontaminationsagenz für radioaktive Abfälle (EP-A-0 189 799), als anionische Komponente für kationische Polymere im Bereich der nicht-linearen Optik (EP-A2-0 490 385) sowie als Polymerisationsstarter (EP-A2-0 353 030).

Die Synthese des Tetraphenylborat-Grundkörpers ist in der Literatur zahlreich beschrieben. Eine allgemeine Übersicht über mögliche Syntheseverfahren bieten Gmelin, Handbuch der Anorganischen Chemie, Band 33/8, S. 173 ff. und Houben-Weyl, Methoden der Organischen Chemie, 4. Auflage, Band 13/3b, S. 761 ff. Die am häufigsten durchgeführte Synthesemethode ist eine Grignard-Umsetzung von Phenylmagnesiumchlorid mit geeigneten Borkomponenten (CS-A-115 040 und US-A-4 510 327).

Nachteilig bei Tetraphenylboraten ist der hohe Marktpreis, der durch die aufwendige Synthese, Aufarbeitung und Reinigung sowie durch die Zersetzlichkeit von Tetraphenylboraten, vor allem in Lösung, bedingt ist. Ursache für die Zersetzlichkeit können Licht, Säuren, starke Alkalien und Oxidationsmittel sowie insbesondere Temperaturbelastung in Lösung sein. Besonders während der hydrolytischen Aufarbeitung liegen die Tetraphenylborate gelöst vor, so daß konkurrierende Zersetzungsreaktionen auftreten können (Nishida, H., et al. Bull. Chem. Soc. Jpn., 57, 2600-2604; Williams, J.L.R. et al., J.Am. Chem. Soc. 89 (1967) 5153). Eine nachträgliche Stabilisierung wieder gelöster Tetraphenylborate ist durch Zugabe von NaOH oder LiOH in wäßrigen Lösungen möglich (US-A-5,069,821).

Die wesentlichen Nebenprodukte der Tetraphenylborat-Herstellung wie Biphenyl, Boronsäure, Triphenylboran und Phenol/Benzol bilden sich vorwiegend während der Synthese und Aufarbeitung und verlangen aufwendige Reinigungsschritte. Als Zersetzungsprodukt tritt im wesentlichen Benzol auf. So kann das Tetraphenylborat durch organische Lösemittel wie Toluol (US-A-4 510 327) oder Benzol (CS-A-115 040) nachträglich aus der wäßrigen Hydrolyselösung extrahiert werden.

Bei den bisherigen Herstellungsverfahren ist von Nachteil, daß aus heutiger Sicht ökologisch und toxikologisch problematische Lösemittel, wie insbesondere Benzol, Toluol und $CHCl_3$, verwendet werden und zusätzliche organische Lösemittel neben denen, die durch die Synthese zwangsläufig vorhanden sind, eingesetzt werden. Dies bedeutet einen erhöhten Aufwand an Entsorgung oder Lösemittel-Recycling und Energie sowie eine Verringerung der Raum-Zeit-Ausbeute und daher eine Kostenerhöhung.

Der vorliegenden Erfindung lag daher die Aufgabe zugrunde, ein neues Aufarbeitungs- und Isolierungsverfahren von Tetraphenylboraten in fester Form zu entwickeln, das eine verbesserte Raum-Zeit-Ausbeute aufweist, wobei der Einsatz organischer Lösemittel minimiert werden sollte und deren Wiederverwendung anzustreben war. Weiterhin sollte die Nebenprodukt-Bildung sowie die Zersetzung insbesondere während der hydrolytischen Aufarbeitung und Isolierung reduziert werden, um aufwendige Reinigungsschritte zu vermeiden. Desweiteren sollte die Aufarbeitung und Isolierung kostengünstig sein und als Endprodukt Tetraphenylborat als lagerstabilen Feststoff in technisch verwendbarer Qualität zum Ziel haben.

Überraschenderweise hat sich nun gezeigt, daß sich durch Sprühtrocknung eines organischen oder wäßrigen oder organisch-wäßrigen Tetraphenylborat-Extraktes die gewünschten Tetraphenylborate unzersetzt und in definierter technischer Qualität als rieselfähiger Feststoff isolieren lassen.

Gegenstand der vorliegenden Erfindung ist ein Verfahren zur Isolierung von Tetraphenylboraten in fester Form, dadurch gekennzeichnet, daß eine organische oder wäßrige oder organisch-wäßrige Lösung oder Suspension des Tetraphenylborats sprühgetrocknet wird.

Im Sinne der vorliegenden Erfindung sind als Ausgangsware für die Sprühtrocknung Lösungen oder Suspensionen eines Tetraphenylborates in wäßrigen, organischen sowie wäßrig-organischen Gemischen generell verwendbar. Als Lösungen und Suspensionen kommen solche in Betracht, die direkt aus der Tetraphenylborat-Synthese erhältlich sind, als auch solche, aus denen Tetraphenylborat zurückgewonnen werden soll.

Geeignete Sprühtrocknungsapparaturen sind beispielsweise Gleichstrom-Trockner mit Zentrifugalzerstäubung, Luftbesen, Gegen-/Gleichstrom-Trockner mit Zweistoffdüsen-Zerstäubung sowie auch Zweipunktaustragung des Trockenproduktes, Gegen-/Gleichstrom-Trockner mit Druckdüsenzerstäubung und Zweipunktaustragung sowie Geräte, die auf Gleichstromtrocknung und Zweidüsen-Zerstäubung basieren.

Zentrale Parameter für die Trocknung von technischen Tetraphenylborat-Lösungen oder Suspensionen sind vor allem die Lufteingangstemperatur und Luftausgangstemperatur, die für die thermische Produktbelastung verantwortlich sind. Weiterhin von Bedeutung sind die Zerstäubercharakteristik und die Trägergasmenge, die mit der gekoppelten Temperatur (Verhältnis aus Eingangstemperatur und Ausgangstemperatur) die Sprühleistung bedingen. So ist bei der Verwendung von Zerstäuberscheiben Geschwindigkeit und Form, zum Beispiel der Lochdurchmesser, bedeutsam.

Für wäßrige Tetraphenylborat-Lösungen oder Suspensionen sind beispielsweise Lufteingangstemperaturen zwischen 100°C und 400°C, vorzugsweise 180 und 250°C, zweckmäßig und Luftaustrittstemperaturen zwischen 50°C und 180°C, vorzugsweise 70 und 120°C. Für organische Tetraphenylborat-Lösungen oder Suspensionen liegen die Inertgaseingangstemperaturen zweckmäßigerweise zwischen 150°C und 200°C und Inertgasausgangstemperaturen zwischen 50°C und 150°C. Bei Verwendung eines Gleichstromtrockners mit Zentrifugalzerstäubung bieten sich Zerstäuberscheiben-Umdrehungen zwischen 10.000 und 50.000 Upm und Lochgrößen zwischen 0,5 mm und 5 mm an.

Die Konzentration des Tetraphenylborats in der sprühzutrocknenden Lösung oder Suspension beträgt zweckmäßigerweise 1 bis 40 Gew.-%, vorzugsweise 1 bis 25 Gew.-%, unabhängig ob ein wäßriger, organischer oder wäßrig-organischer Extrakt verwendet wird. Für wäßrige Extrakte ist eine Konzentration von 1 bis 15 Gew.-% besonders bevorzugt.

Überraschenderweise werden trotz der bei der Sprühtrocknung auftretenden hohen Temperaturen Tetraphenylborate in einer besonders homogenen technischen Qualität erhalten, die nachstehend näher beschrieben wird.

In einer bevorzugten Ausführungsform des erfindungsgemäßen Verfahrens wird das Tetraphenylborat durch eine übliche Grignardreaktion hergestellt und die resultierende Grignard-Reaktionslösung durch eine Kombination der Verfahrensschritte a) bis d) aufgearbeitet:

a) Hydrolyse der Grignard-Reaktionslösung in Gegenwart eines pH-steuernden Hilfsmittels,
b) adsorptive Reinigung der Hydrolyselösung,
c) Lösemittelaustausch der organischen Lösemittel gegen Wasser und
d) Sprühtrocknung des wäßrigen Extraktes aus c).

Ausgangsprodukt ist eine nach literaturbekannten Methoden erhältliche etherhaltige Grignard-Reaktionslösung aus der Umsetzung eines Boresters mit einem Phenylmagnesium-halogenid. Als Borester sind z.B. von Interesse: Borsäure-methylester, -propylester, -butylester und -amylester (Gmelin, Handbuch der Anorganischen Chemie, Band 33/8, S. 173 ff; Holzapfel, H. und Richter, C., J. Prakt. Chem. 26 (1964) 15-23).

a) Die Hydrolyse der besagten Grignard-Reaktionslösung wird unter Zugabe pH-steuernder Hilfsmittel durchgeführt. Als pH-steuernde Hilfsmittel kommen organische oder anorganische Basen, vorzugsweise ein Alkalisalz der Essigsäure, Milchsäure oder Weinsäure, ein Alkalihydroxid, Erdalkalihydroxid, ein Alkalicarbonat, ein Erdalkalicarbonat, ein Alkali- oder Erdalkalisalz eines Phosphats oder Hydrogenphosphats oder ein Gemisch aus mindestens zwei der genannten Stoffe in Betracht, insbesondere Natriumhydrogenphosphat, Natriumcarbonat, Natriumacetat, Natriumlactat und Magnesiumhydroxid. Ferner von Interesse sind Sulfide, Silikate, Amine, Phthalate, Citrate, Oxalate, vorzugsweise deren Alkali- oder Erdalkalisalze. Bevorzugt sind Mischungen aus 2 bis 5, vorzugsweise 2 bis 3, verschiedenen pH-steuernden Hilfsmitteln.

Die Durchführung der Hydrolyse erfolgt durch Vorlegen einer wäßrigen oder wäßrig-organischen Lösung oder Suspension der pH-steuernden Hilfsmittel und Zudosieren der Grignard-Reaktionslösung innerhalb von 5 bis 60 Minuten, vorzugsweise 5 bis 30 Minuten, gegebenenfalls mittels Überdruck, z.B. mit $N_2$, unter Rühren, vorzugsweise bei 5 bis 50 U/Min. Die Konzentration der genannten Hilfsmittel liegt zwischen 0,1 und 50 Gew.-%, vorzugsweise 0,5 und 15 Gew.-%, insbesondere 1 und 10 Gew.-%, bezogen auf das Gewicht des Hydrolyseprodukts aus der Grignard-Reaktionslösung. Die pH-steuernden Hilfsmittel stellen in der wäßrig oder wäßrig-organischen Hydrolyselösung einen pH-Wert $\geq 7$, vorzugsweise 7 bis 11, insbesondere 7,5 bis 10,5, ein. Die Ausgangstemperatur der zu hydrolysierenden Grignardlösung beträgt -20 bis + 60°C, vorzugsweise 0 bis 50°C, insbesondere 5 bis 40°C. Nach der Zudosierung schließt sich eine Nachrührung vorzugsweise von 5 bis 120 Minuten bei einer Temperatur zwischen 0 und 60°C an. Es ist vorteilhaft, dem Hydrolysegemisch nach der Hydrolyse eine zusätzliche Menge des Alkohols der Borester-Komponente oder des Ethers der Grignard-Reaktionslösung zuzusetzen und nachzurühren. Die zugesetzte Gewichtsmenge des Alkohols oder Ethers beträgt zweckmäßigerweise das 0,5 bis 5-fache, vorzugsweise 1 bis 3-fache, der Ethermenge der Grignard-Reaktionslösung.

Die nachstehende Tabelle 1 gibt den pH-Verlauf und den Anteil an bestimmten Nebenprodukten, ohne und mit Zusatz pH-steuernder Hilfsmittel, beim Hydrolyse-Schritt an. Sofern nicht anders vermerkt, sind die Prozentangaben relative Werte, erhalten aus HPLC-Analyse (Flächen-%, 100 % ist die Summe aller detektierten Substanzen). Die Hydrolysetemperatur ist 25 bis 35°C, ohne Zugabe von Adsorptionsmitteln. "Tri" bedeutet Triphenylboran.

Tabelle 1

| Zusatzstoffe in Gew.-% | Nebenprodukte | | | pH-Werte | | |
|---|---|---|---|---|---|---|
| | Tri | Benzol | Biphenyl | $pH_{Start}$ | $pH_{5sec}$ | $pH_{END}$ |
| ohne Zusätze | 2,0 % | 1,0 % | 33 % | 6,8 | 9,6 | 8,8 |

Tabelle 1 (fortgesetzt)

| Zusatzstoffe in Gew.-% | Nebenprodukte | | | pH-Werte | | |
|---|---|---|---|---|---|---|
| | Tri | Benzol | Biphenyl | $pH_{Start}$ | $pH_{5sec}$ | $pH_{END}$ |
| 5 % $Na_3PO_4$ x 10 $H_2O$ | 2,0 % | 1,0 % | 32 % | 11,9 | 11,7 | 8,8 |
| 5 % Mg $(OH)_2$ | 4,2 % | 0,4 % | 0,4 % | 10,1 | 10,2 | 8,9 |
| 20 % Mg $(OH)_2$ | 1,8 % | 0 % | 0,2 % | 9,6 | 9,8 | 8,5 |
| 5 % Na-Laktat | 10,1 % | 0,4 % | 0,7 % | 6,7 | 10,8 | 9,1 |
| 20 % Na-Laktat | 23,9 % | 0,3 % | 1,2 % | 6,7 | 10,6 | 10,9 |
| 5 % Na-Acetat | 0 % | 2,0 % | 8 % | 8,5 | 10,8 | 8,9 |
| 20 % Na-Acetat | 0 % | 3,0 % | 12 % | 9,6 | 10,4 | 8,8 |

Die prozentualen Tetraphenylborat-Anteile zeigen ihre höchsten Werte mit 91 % und 96 % bei Verwendung einer $Mg(OH)_2$-Suspension als pH-steuerndem Hilfsmittel. Ohne Zusatz beträgt die Konzentration 59 %. Damit wird eine deutliche Ausbeutesteigerung durch Zusatz pH-steuernder Hilfsmittel erreicht.

Die durch Grignard-Nebenreaktionen und hydrolytischen Abbau resultierende Bildung der Nebenprodukte Tri, Benzol und Biphenyl ist in unterschiedlicher Weise von der Anwesenheit pH-steuernder Hilfsmittel abhängig. So wird insbesondere der Tri-Anteil durch Acetat vermindert, während der Biphenyl-Anteil durch $Mg(OH)_2$ herabgesetzt wird. Aus diesem Grunde sind Mischungen von pH-steuernden Hilfsmitteln vorteilhaft.

Es zeigt sich ferner, daß bei pH-Werten unter pH 7 und über pH 11 bestimmte Nebenprodukte bevorzugt gebildet werden.

Der Zusatz pH-steuernder Hilfsmittel kann auch zur Vermeidung einer Zersetzung von Tetraphenylboraten in Lösung vorgenommen werden, beispielsweise wenn eine Lagerung der Lösung aus verfahrenstechnischen Gründen erforderlich ist.

b) Die adsorptive Reinigung der Hydrolyselösung erfolgt durch Zusatz eines Adsorptionsmittels zur Hydrolyselösung vor oder nach der Hydrolysereaktion, spätestens jedoch vor dem Sprühtrocknungsschritt d). Das Adsorptionsmittel kann zusammen mit den pH-steuernden Hilfsmitteln in die Hydrolyselösung eingebracht oder nach erfolgter Hydrolyse in die Tetraphenylborat-Lösung gegeben werden, wobei es unerheblich ist, ob die Lösung ein wäßriges oder wäßrig-organisches Gemisch ist. Als Adsorptionsmittel kommen Aktivkohle, Zeolithe, wie beispielsweise ZSM-Typen, Offretit-, Mordenit-, Ferrierit-und Erionit-Typen, Aluminiumoxid, oberflächenreiche Siliciumoxide und Silikate sowie Polymere, Adsorberharze, wie vernetztes Poly-(N-vinylimidazol), Poly-(N-vinylpyridin) oder mit Methylenbisacrylamid vernetztes Poly-(N-vinylimidazol) sowie Mischungen der genannten Stoffe in Betracht.

Die Einsatzmengen der Adsorptionsmittel liegen zwischen 0,001 und 20 Gew.-%, vorzugsweise 0,01 und 10 Gew.-%, insbesondere 0,1 und 10 Gew.-%, bezogen auf die Gesamtlösungsmittelmenge, in der der Tetraphenylborat-Wirkstoff enthalten ist. Die Einwirkzeit beträgt zweckmäßigerweise 1 bis 45 Min, vorteilhaft 5 bis 30 Min und besonders vorteilhaft 5 bis 20 Min, wobei die Temperatur während des Rührens 0 bis 60°C, bevorzugt 5 bis 55°C und besonders bevorzugt 10 bis 50°C, beträgt und die Abtrennung nach erfolgter Adsorption aus dem Gemisch durch Filtration, bevorzugt durch Schichtenfilter, erfolgt.

Die nachstehende Tabelle 2 zeigt die Wirkung eines Adsorptionsmittels, in diesem Fall ein Gemisch aus einem Obsidian-ähnlichen Naturstoff vulkanischen Ursprungs (Naturglas), der im wesentlichen aus $SiO_2$ (~ 75 %), $Al_2O_3$ (≈ 13 %), $Na_2O$ (≈ 5 %), $K_2O$ (≈ 5 %) und verschiedenen Metalloxiden besteht, beispielsweise ® Perlite J4 (Fa. Lehmann, Voss & Co., Hamburg), und Aktivkohle, in Abwesenheit und in Gegenwart verschiedener Salze und/oder pH-steuernder Hilfsmittel. Prozentangaben bedeuten Gewichtsprozente in der Hydrolyselösung im Fall von Benzol, im Fall von Biphenyl sind es HPLC-Flächenprozente analog zu Tabelle 1. Temperatur: 25°C, Einwirkzeit des Adsorptionsmittels: 15 Minuten.

Tabelle 2

| Zusatz | Nebenprodukt | |
|---|---|---|
| Perlite / Aktiv-Kohle sowie | Biphenyl | Benzol |
| NaCl | 0,8 | 0,007 Gew.-% |

Tabelle 2 (fortgesetzt)

| Zusatz | Nebenprodukt | |
|---|---|---|
| Perlite / Aktiv-Kohle sowie | Biphenyl | Benzol |
| NaCl + $Na_2CO_3$ | nicht nachweisbar | 0,003 Gew.-% |
| - | 0,3 % | 0,001 Gew.-% |

Beim Vergleich mit den Werten aus Tabelle 1 wird deutlich, daß durch die Zugabe von Adsorptionsmitteln der Biphenyl- und Benzolanteil deutlich verringert wird. Die adsorptive Reinigung wirkt gezielt gegen Benzol und Biphenyl, während die Tri-Konzentration relativ unbeeinflußt bleibt. pH-steuernde Hilfsmittel hingegen wirken vor allem der Tri- und Biphenyl-Bildung entgegen, während der Einfluß auf die Bildung von Benzol gering ist (Tabelle 1). Daher ist eine Kombination aus pH-steuernden Hilfsmitteln und adsorptiver Reinigung besonders wirkungsvoll.

Bevorzugte Verfahrensvarianten der Klärfiltration sind:

Variante 1:

Zu einer ca. 10 gew.-%igen Lösung des Tetraphenylborat-Salzes werden 1 kg Perlite J4, bezogen auf 40 kg Tetraphenylborat Reinsubstanz, bei einer Temperatur von 50°C zudosiert. Die Suspension wird 15 Minuten verrührt. Anschließend wird das Adsorptionsmittel durch Filtration abgetrennt.

Variante 2:

250 kg einer 10 gew.-%igen Tetraphenylborat-Lösung werden mit einer Suspension aus 2 kg Aktivkohle und Perlite J4 in 65 kg entmineralisiertem Wasser bei 30 bis 50°C behandelt. Die Abtrennung der Adsorptionsmittels erfolgt gleichfalls über Filtration.

Variante 3:

50 ml einer etwa 10 gew.-%igen Tetraphenylborat-Lösung werden mit einer Mischung aus 0,6 g $Al_2O_3$ (neutral oder alkalisch), 0,3 g Perlite J4 und 0,3 g Aktivkohle versetzt und insgesamt 45 Minuten bei 15°C gerührt, wobei zunächst 15 Min mit $Al_2O_3$ gerührt, anschließend Aktivkohle/Perlite zudosiert und weitere 30 Min gerührt wird.
Als besonders geeignet erweist sich basisches oder neutrales $Al_2O_3$, da bei dessen Verwendung weder Benzol noch Biphenyl nachgewiesen wurden.

c) Nach der Hydrolyse der Grignard-Reaktionslösung erfolgt ein Lösemittelaustausch der organischen Lösemittel gegen Wasser, vorzugsweise durch destillative Entfernung der organischen Lösemittel und Zugabe von Wasser vor der Destillation. Es ist zweckmäßig, die Destillation bei einer Temperatur unterhalb von 70°C, vorzugsweise zwischen 20 und 50°C, durchzuführen. Soweit erforderlich, kann die Destillation unter vermindertem Druck, beispielsweise zwischen 50 und 500 mbar, durchgeführt werden. Es ist zweckmäßig, daß die wäßrige und organische Phase vor der Destillation etwa gleiches Volumen haben. Weiterhin ist es vorteilhaft, wenn die wäßrige Phase die vorstehend angegebenen pH-steuernden Hilfsmittel in den für die Hydrolysereaktion genannten Konzentrationen enthält. Gegebenenfalls wird vor der Destillation eine weitere Zugabe eines pH-steuernden Hilfsmittels in die wäßrige Phase vorgenommen.

Nach der Destillation beträgt die Konzentration des gewünschten Wirkstoffes in der wäßrigen Phase je nach Temperatur 1 bis 25 Gew.-%, vorzugsweise 5 bis 20 Gew.-%, insbesondere 5 bis 15 Gew.-%.

d) Die nach der Destillation als Rückstand zurückbleibende wäßrige Phase, die den Wirkstoff in den vorstehend genannten Konzentrationen in Lösung oder in Suspension enthält, wird anschließend, wie vorstehend beschrieben, sprühgetrocknet.

Tetraphenylborat wird vorzugsweise in Form eines in Wasser leicht löslichen Salzes, insbesondere als Natrium-, Lithium-, Magnesium- oder Magnesiumchloro-Salz, oder als Gemisch mehrerer dieser Salze in fester Form isoliert, wobei naturgemäß diejenigen Kationen überwiegend vorhanden sind, die im Verlauf der Tetraphenylborat-Herstellung, beispielsweise durch Grignardreaktion, und der Hydrolyse in der jeweiligen Lösung im Überschuß vorhanden waren oder zugesetzt wurden. Im Falle, daß Lithiumtetraphenylborat hergestellt werden soll, müssen entsprechende Mengen eines Lithiumsalzes zugesetzt werden.

Es ist bekannt, daß Tetraphenylborate insbesondere in Lösung temperaturempfindlich sind. Es hat sich gezeigt, daß Temperaturen oberhalb von 80°C bereits bei einer Verweilzeit von 30 Minuten eine deutliche Zersetzung

des Tetraphenylborats bewirken. Die nachfolgende Tabelle 3 zeigt die noch vorhandene Menge an Natriumtetraphenylborat in Prozenten relativ zur eingesetzten Menge (100 %) in Abhängigkeit von der Temperatur. Die Verweilzeit bei angegebener Temperatur beträgt jeweils 30 Minuten:

Tabelle 3

| Menge / Wirkstoff in % | Temperatur |
|---|---|
| 100 | 70°C |
| 90 | 80°C |
| 80 | 85°C |
| 50 | 90°C |
| 10 | 95°C |

Oberhalb von 90°C schreitet die Zersetzung schnell voran. Es war daher besonders überraschend, daß Tetraphenylborate kurzzeitige, aber hohe Temperaturbelastungen > 90°C, wie sie beispielsweise bei einer Sprühtrocknung auftreten, ohne nennenswerte Zersetzungserscheinungen überstehen.

Der aus der Sprühtrocknung erhältliche Wirkstoff entspricht der gewünschten technischen Qualität, wie nachstehend beschrieben.
Die nach dem erfindungsgemäßen Verfahren hergestellten festen Tetraphenylborate zeichnen sich durch folgende Produkteigenschaften aus:

- Restfeuchte (gelöst und bestimmt nach der Karl-Fischer-Methode). Zwischen 0,001 und 8 Gew.-%, bevorzugt 0,01 und 6 Gew.-%, insbesondere 0,05 und 5 Gew.-%, Wasseranteil.
- Die Leitfähigkeit einer 10 gew.-%igen wäßrigen Lösung beträgt 10 bis 20 mS/cm.
- Der Eigen-pH-Wert in 10 gew.-%iger wäßriger Lösung beträgt pH 7,0 bis 11, vorzugsweise pH 8 bis 10,5.
- Differentialthermoanalyse (DTA): Die thermische Beständigkeit des technischen Feststoffes ist dadurch gekennzeichnet, daß bei einer Aufheizung von 3 K/Min keine Zersetzung bis 400°C auftritt.
- Die dielektrischen Kenndaten (DK) des technischen Tetraphenylborat-Feststoffes sind durch folgende Werte charakterisiert:
  - der spezifische Durchgangswiderstand, der an einem vorbehandelten Preßling (∅ 4 cm) von 0,8 bis 1,6 mm Dicke bestimmt wird, beträgt $1 \times 10^9\ \Omega \cdot cm$ bis $9 \times 10^{16}\ \Omega \cdot cm$, bevorzugt $1 \times 10^9$ bis $9 \times 10^{15}\ \Omega \cdot cm$.
  - der dielektrische Verlustfaktor $\tan \delta$, an derselben Probe frequenzabhängig bestimmt, liegt zwischen $5 \times 10^{-1}$ und $1 \times 10^{-3}$, bei 1 kHz bestimmt, zwischen $9 \times 10^{-1}$ und $5 \times 10^{-3}$.
  - die Dielektrizitätszahl $\varepsilon$, bei 1 kHz bestimmt, liegt bei 3 bis 11.
- Die Kristallinität des technischen Feststoffes, charakterisiert durch ein Röntgenbeugungsdiagramm, zeigt einen Kristallinitätsanteil von > 50 %, besonders bevorzugt zwischen 60 % und 100 %, wobei im 2 Theta-Meßbereich zwei besonders intensive Reflexe auftreten, von denen der erste zwischen 6 und 15 (2 Theta) und der zweite zwischen 18 und 24 (2Theta) liegt.

Ein besonderes Merkmal, durch das sich ein erfindungsgemäß hergestelltes festes Tetraphenylborat von einem Tetraphenylborat aus dem Stand der Technik unterscheidet, ist die Teilchenform und die Teilchengröße sowie deren Verteilungsbreite. Während ein dem Stand der Technik entsprechendes Tetraphenylborat aus überwiegend quader-, stäbchen- oder nadelförmigen Kristalliten besteht, haben die Teilchen eines erfindungsgemäßen Tetraphenylborats eine runde, ovale oder zumindest abgerundete Form, vorzugsweise Kugelgestalt, wobei die Teilchen kraterartige Einbuchtungen aufweisen können.

Die nachstehende Tabelle 4 zeigt ein Vergleich der Teilchengrößen-Verteilung dreier Proben kommerziell erhältlichen, dem Stand der Technik entsprechenden Na-Tetraphenylborats (Probe 1, 2, 3) mit zwei Proben (Probe I und II) des erfindungsgemäßen Tetraphenylborates in Form seines Na-Salzes.

Tabelle 4

| Gewichts-% | Probe I | Probe II | Probe 1 | Probe 2 | Probe 3 |
|---|---|---|---|---|---|
| dx-Werte | Korngröße in [μm] | | | | |
| $d_{10}$ | 3 | 1 | 15 | 5 | 16 |
| $d_{50}$ | 13 | 16 | 98 | 38 | 92 |
| $d_{95}$ | 29 | 42 | 350 | 320 | 360 |
| $\Delta$ ($d_{95}$-$d_{10}$) | 26 | 41 | 335 | 315 | 344 |

Tabelle 4 belegt, daß die erfindungsgemäßen Proben nicht nur deutlich feiner sind ($d_{50}$- und $d_{95}$-Wert), sondern auch eine deutlich engere Korngrößen-Verteilung $\Delta$ ($d_{95}$-$d_{10}$) aufweisen und damit eine größere Homogenität zeigen. Die Teilchengröße kann durch den $d_{95}$-Wert oder den $d_{50}$-Wert definiert werden. Der $d_{95}$-Wert liegt zwischen 0,1 μm und 250 μm, vorzugsweise zwischen 0,5 μm und 150 μm, der $d_{50}$-Wert liegt zwischen 0,1 μm und 30 μm, vorzugsweise zwischen 1 μm und 25 μm.

Die Teilchengrößenverteilung d ist durch die Differenz $d_{95}$-$d_{10}$ definiert und liegt zwischen 5 und 150 μm, vorzugsweise zwischen 10 und 100 μm.

Die Teilchengröße, Teilchenform und enge Teilchengrößen-Verteilung der erfindungsgemäßen Tetraphenylborate bewirken mehrere anwendungstechnische Vorteile, beispielsweise verbesserte Dispergierbarkeit im Harz, Wachs oder pastösen Medien und eine höhere Schüttdichte.

Gegenstand der vorliegenden Erfindung ist auch eine Verbindung der Formel (I) in fester Form

$$\overset{\ominus}{B}(\text{Phenyl})_4\ X^{\oplus} \qquad (I),$$

worin $X^{\oplus}$ die Bedeutung $Na^{\oplus}$, $Li^{\oplus}$, $Mg^{2+}/2$ oder $MgCl^{+}$ hat, dadurch gekennzeichnet, daß die Teilchenform der Feststoffteilchen überwiegend kugelförmig, rund oder oval ist.

Beispiel 1

79,0 g $Mg(OH)_2$ werden in 316,0 g entmineralisiertem Wasser homogen suspendiert und mit einer Lösung aus 65,3 g NaCl in 400 g entionisiertem Wasser bei 25 °C homogen gemischt. Der Anfangs-pH beträgt 9,9.

Innerhalb von 3,5 min wird diese wäßrige Suspension zu einer Grignard-Lösung enthaltend 0,41 mol Phenylmagnesiumchlorid als Grignardreagenz und 0,103 mol eines Boresters, zudosiert. Die Endtemperatur beträgt 39°C, der End-pH 8,5.

Nach 15 Minuten ist der pH konstant (9,1) und die Temperatur liegt bei 29°C. Zur Extraktion werden 100 g des der Alkoholkomponente des Boresters entsprechenden Alkohols zugesetzt, 30 min bei 25 °C nachgerührt und über ein Scheidegefäß abgetrennt. Der alkoholische Extrakt wird mit 150 g $H_2O$ versetzt und destillativ vom Alkohol und vom Ether der Grignardlösung befreit, wobei die Sumpftemperatur 70°C nicht übersteigt. Der abdestillierte Alkohol kann zurückgewonnen und erneut zur Extraktion verwendet werden.

Zur Reinigung werden anschließend 2 Gew.-% Aktivkohle und 2 Gew.- % eines Kieselgurs, beispielsweise ®Celite, zugesetzt, 15 Min bei 22°C gerührt, abfiltriert und in einen Sprühtrockner überführt. Die Sprühtrocknung erfolgt bei einer Lufteintrittstempertur von 220°C und einer Austrittstemperatur von 80°C.

Die resultierende Pulverware zeigt

| | | |
|---|---|---|
| 1. | DTA | Zers. > 400°C |
| 2. | Kristallinität | > 60 % |

(fortgesetzt)

| | | | |
|---|---|---|---|
| 3. | DK | a) Durchgangswiderstand | $1 \times 10^9$ (Ω . cm) |
| | | b) tan δ | $5 \times 10^{-1}$ (1 kHz) |
| | | c) ε | 10 (1 kHz) |
| 4. | Eigen-pH | | 9,3 |
| 5. | Leitfähigkeit | | 14,1 mS/cm |
| 6. | Teilchengrößen-Verteilung | | $d_{95}$ = 29 µm, Δ 26 µm |
| 7. | Restfeuchte | | 0,2 % |

Beispiel 2

20 g $Mg(OH)_2$ werden in 316,0 g entmineralisiertem Wasser suspendiert und mit 8 g Na-Acetat sowie 65,3 g NaCl, gelöst in 400 g entionisiertem Wasser, bei 25°C gemischt.
Innerhalb von 3,5 min wird diese wäßrige Mischung unter Zuhilfenahme von Druck zu einer Grignard-Reaktionslösung, enthaltend 0,41 mol Phenylmagnesiumchlorid als Grignardreagenz und 0,103 mol eines Boresters, zudosiert. Die Endtempratur beträgt 40°C, der End-pH-Wert beträgt 8,5.
Nach 15 Minuten ist der pH-Wert konstant (9,1) und die Temperatur liegt bei etwa 30°C.
Zur Extraktion werden 100 g des der Alkoholkomponente des Boresters entsprechenden Alkohols zugesetzt, 30 Minuten bei 25°C intensiv nachgerührt und über ein Scheidegefäß getrennt.
Der alkoholische Extrakt wird mit 150 g entmineralisiertem Wasser versetzt und destillativ vom Alkohol befreit, wobei die Sumpftemperatur zwischen 30 und 65°C liegt und abhängig vom verwendeten Vakuum ist.
Der abdestillierte Alkohol wird zurückgeführt und kann im nächsten Ansatz zur Extraktion wieder verwendet werden.
Zur Reinigung werden anschließend jeweils 1 Gew.-% Aktivkohle und Celite zugesetzt und 15 Minuten bei 20°C gerührt.
Anschließend wird abfiltriert und in einem Sprühtrockner die wäßrige 10 gew.-%ige Lösung sprühgetrocknet.
Die Sprühtrocknung erfolgt bei einer Lufteintrittstemperatur von 220°C und einer Austrittstemperatur von 90°C.
Die resultierende Pulverware zeigt

| | | | |
|---|---|---|---|
| 1) | DTA | | Zers. > 400°C |
| 2) | Kristallinität | | > 60 % |
| 3) | DK | a) Durchgangswiderstand | $3 \times 10^9$ Ω . cm |
| | | b) tan δ | $3 \times 10^{-1}$ (1 kHz) |
| | | c) ε | 8 (1 kHz) |
| 4) | Eigen-pH-Wert, 10 %ige Lösung | | 9,4 |
| 5) | Leitfähigkeit, 10 %ige Lösung | | 15,3 mS/cm |
| 6) | Teilchengrößen-Verteilung | | $d_{95}$ = 29 µm, Δ = 26 µm |
| 7) | Restfeuchte | | 0,2 % |

Beispiel 3

In einem Stahlkessel mit 1,2 $m^3$ Volumen, Rahmenrührer, 30 l Glaszulaufgefäß, Brüdenrohr, Glaskühler und Thermometer werden 500 kg Wasser, in dem 100 kg kalziniertes $Na_2CO_3$ als pH-stabilisierendes Hilfsmittel zugesetzt sind, auf 40 bis 45°C erwärmt. Innerhalb von 10 Minuten werden 285 l Grignard-Reaktionslösung zu der Hydrolyselösung zudosiert. Vorteilhaft ist auch das Zudosieren mittels Schutzgas-Überdruck ($N_2$/Ar). Während des Zudosierens wird die Reaktionslösung intensiv gerührt.

Nach der Zudosierung stellt sich eine Temperatur von 45 bis 55°C ein und es wird 45 Minuten nachgerührt. Von dem entstandenen Zweiphasengemisch wird nach Kühlung auf 10 bis 25 °C die organische Oberphase abgetrennt, 150 kg eines Alkohols, welcher der Alkoholkomponente eines Boresters entspricht, oder Ethers, der dem für die Herstellung des Grignardreagenzes verwendeten Ethers entspricht, zudosiert, erneut 30 Minuten intensiv gerührt und die Phasentrennung durchgeführt.
Zu den vereinigten organischen Phasen werden 250 kg Wasser gegeben und im Vakuum zwischen 50 und 500 mbar bei Temperaturen unterhalb von 70°C die organische Phase abdestilliert. Nach der Destillation werden 2 kg Aktivkohle und 2 kg Perlite J 4 zugesetzt, kurz bei 25 bis 50°C gerührt und über einen Einschichtenfilter abfiltriert.
Das Filtrat wird sprühgetrocknet bei einer Lufteingangstemperatur von 210 bis 230°C und einer Luftaustrittstemperatur von 80 bis 100°C.

Die resultierende Pulverware weist eine Qualität wie folgt auf:

| | | | |
|---|---|---|---|
| 1. | DTA Zers. >400°C | | |
| 2) | Kristallinität > 60 % | | |
| 3) | DK | a) Durchgangswiderstand | 1,3 x $10^{13}$ Ω.cm |
| | | b) Dielektrischer Verlustfaktor | 3 x $10^{-2}$ (1 kHz) |
| | | c) Dielektrizitätszahl ε | 4,8 (1 kHz) |
| 4) | Eigen-pH (25°C), 10 %ige Lösung | | 9,4 |
| 5) | Leitfähigkeit, 10 %ige Lösung | | 3,5 mS/cm |
| 6) | Teilchengröße | | $d_{95}$ = 43 µm, △ = 41 µm |
| 7) | Restfeuchte | | 0,33 % |

Die Eignung der technischen Qualität wird durch die Umsetzung zu Tetrabutylammonium-Tetraphenylborat belegt. Für das Produkt ergibt sich:

| | | |
|---|---|---|
| a) | Eigen-pH-Wert | 7,3 |
| b) | Leitfähigkeit | 19,5 µS/cm |
| c) | Thermische Stabilität (Smp.) | 234°C. |

## Patentansprüche

1. Verfahren zur Isolierung von Tetraphenylboraten in fester Form, dadurch gekennzeichnet, daß eine organische oder wäßrige oder organischwäßrige Lösung oder Suspension des Tetraphenylborats sprühgetrocknet wird.

2. Verfahren nach Anspruch 1, dadurch gekennzeichnet, daß das Tetraphenylborat durch eine Grignard-Reaktion hergestellt wird und die Aufarbeitung der Grignard-Reaktionslösung eine Kombination der Verfahrensschritte a) bis d) darstellt

   a) Hydrolyse der Grignard-Reaktionslösung in Gegenwart eines pH-steuernden Hilfsmittels,
   b) adsorptive Reinigung der Hydrolyselösung,
   c) Lösemittelaustausch der organischen Lösemittel gegen Wasser und
   d) Sprühtrocknung des wäßrigen Extraktes aus c).

3. Verfahren nach Anspruch 2, dadurch gekennzeichnet, daß die adsorptive Reinigung durch Zugabe eines Adsorptionsmittels zur Hydrolyselösung vor oder nach der Hydrolyse, aber vor der Sprühtrocknung durchgeführt wird.

4. Verfahren nach Anspruch 2 oder 3, dadurch gekennzeichnet, daß der wäßrigen Phase nach dem Lösemittelaustausch ein Adsorptionsmittel zugegeben wird.

**5.** Verfahren nach mindestens einem der Ansprüche 2 bis 4, dadurch gekennzeichnet, daß die adsorptive Reinigung durch Zugabe von Aktivkohle, Zeolithen, Aluminiumoxid, oberflächenreichen Siliciumoxiden, Silikaten oder einem Gemisch der genannten Adsorptionsmittel durchgeführt wird.

**6.** Verfahren nach mindestens einem der Ansprüche 2 bis 5, dadurch gekennzeichnet, daß nach dem Lösemittelaustausch c) eine weitere Zugabe eines pH-steuernden Hilfsmittels erfolgt.

**7.** Verfahren nach mindestens einem der Ansprüche 2 bis 6, dadurch gekennzeichnet, daß das pH-steuernde Hilfsmittel eine organische oder anorganische Base, vorzugsweise ein Alkalisalz der Essigsäure, Milchsäure oder Weinsäure, ein Alkalihydroxid, Erdalkalihydroxid, ein Alkalicarbonat, ein Erdalkalicarbonat, ein Alkali- oder Erdalkalisalz eines Phosphats oder Hydrogenphosphats oder ein Gemisch aus mindestens zwei der genannten Stoffe ist.

**8.** Verfahren nach mindestens einem der Ansprüche 2 bis 7, dadurch gekennzeichnet, daß das pH-steuernde Hilfsmittel in einer Konzentration von 0,1 bis 50 Gew.-%, vorzugsweise 0,5 bis 15 Gew.-%, insbesondere 1 bis 10 Gew.-%, bezogen auf das Gewicht des Hydrolyseproduktes aus der Grignard-Reaktionslösung, vorhanden ist, so daß der pH-Wert der Hydrolyselösung zwischen pH 7 und 11, vorzugsweise 7,5 und 10,5, liegt.

**9.** Verfahren nach mindestens einem der Ansprüche 2 bis 8, dadurch gekennzeichnet, daß der Lösemittelaustausch durch destillative Entfernung des Lösungsmittels nach Zugabe von Wasser erfolgt.

**10.** Verfahren nach Anspruch 9, dadurch gekennzeichnet, daß die destillative Entfernung des Lösungsmittels unter vermindertem Druck und bei Temperaturen unterhalb von 70°C, vorzugsweise zwischen 20 und 50°C, erfolgt.

**11.** Verfahren nach mindestens einem der Ansprüche 1 bis 10, dadurch gekennzeichnet, daß die Konzentration des Tetraphenylborats in der sprühzutrocknenden Lösung 1 bis 40 Gew.-%, vorzugsweise 1 bis 25 Gew.-%, beträgt.

**12.** Verfahren nach mindestens einem der Ansprüche 1 bis 11, dadurch gekennzeichnet, daß das Tetraphenylborat in Form eines wasserlöslichen Salzes, vorzugsweise als Lithium-, Natrium-, Magnesium- oder Magnesiumchloro-Salz oder eines Gemisches der genannten Salze isoliert wird.

**13.** Verbindung der Formel (I) in fester Form

$$\overset{\ominus}{B}(Phenyl)_4\ X^{\oplus} \qquad (I),$$

worin $X^{\oplus}$ die Bedeutung $Na^{\oplus}$, $Li^{\oplus}$, $Mg^{2+}/2$ oder $MgCl^{+}$ hat, dadurch gekennzeichnet, daß die Teilchenform der Feststoffteilchen überwiegend kugelförmig, rund oder oval ist.

**Claims**

**1.** A process for isolating tetraphenylborates in solid form, which comprises spray drying an organic or aqueous or organic-aqueous solution or suspension of the tetraphenylborate.

**2.** The process as claimed in claim 1, wherein the tetraphenylborate is prepared by a Grignard reaction and the work up of the Grignard reaction solution is a combination of the process steps a) to d):

a) hydrolysis of the Grignard reaction solution in the presence of a pH-controlling auxiliary,
b) adsorptive purification of the hydrolysis solution,
c) solvent replacement of the organic solvents with water and
d) spray drying of the aqueous extract from c).

**3.** The process as claimed in claim 2, wherein the adsorptive purification is carried out by addition of an adsorbent to the hydrolysis solution prior to or after hydrolysis, but prior to spray drying.

4. The process as claimed in claim 2 or 3, wherein an adsorbent is added to the aqueous phase after the solvent replacement.

5. The process as claimed in at least one of claims 2 to 4, wherein the adsorptive purification is carried out by addition of activated carbon, zeolites, aluminum oxide, high-surface-area silicon oxides, silicates or a mixture of the specified adsorbents.

6. The process as claimed in at least one of claims 2 to 5, wherein the solvent replacement c) is followed by a further addition of a pH-controlling auxiliary.

7. The process as claimed in at least one of claims 2 to 6, wherein the pH-controlling auxiliary is an organic or inorganic base, preferably an alkali metal salt of acetic acid, lactic acid or tartaric acid, an alkali metal hydroxide, an alkaline earth metal hydroxide, an alkali metal carbonate, an alkaline earth metal carbonate, an alkali metal or alkaline earth metal salt of a phosphate or hydrogen phosphate or a mixture of at least two of the specified materials.

8. The process as claimed in at least one of claims 2 to 7, wherein the pH-controlling auxiliary is present in a concentration of from 0.1 to 50% by weight, preferably from 0.5 to 15% by weight, in particular from 1 to 10% by weight, based on the weight of the hydrolysis product from the Grignard reaction solution, so that the pH of the hydrolysis solution is between pH 7 and 11, preferably 7.5 and 10.5.

9. The process as claimed in at least one of claims 2 to 8, wherein the solvent replacement is carried out by distillative removal of the solvent after addition of water.

10. The process as claimed in claim 9, wherein the distillative removal of the solvent is carried out under reduced pressure and at temperatures below 70°C, preferably between 20 and 50°C.

11. The process as claimed in at least one of claims 1 to 10, wherein the concentration of the tetraphenylborate in the solution to be spray dried is from 1 to 40% by weight, preferably from 1 to 25% by weight.

12. The process as claimed in at least one of claims 1 to 11, wherein the tetraphenylborate is isolated in the form of a water-soluble salt, preferably as a lithium, sodium, magnesium or magnesium chloride salt or a mixture of the specified salts.

13. A compound of the formula (I) in solid form

$$\overset{\ominus}{B}(\text{phenyl})_4X^{\oplus} \qquad (I),$$

where $X^{\oplus}$ is $Na^{\oplus}$, $Li^{\oplus}$, $Mg^{2+}/2$ or $MgCl^{+}$, wherein the particle shape of the solid particles is predominantly spherical, round or oval.

**Revendications**

1. Procédé pour isoler des tétraphénylborates sous forme solide, caractérisé en ce qu'une solution ou suspension organique ou aqueuse ou hydroorganique du tétraphénylborate est séchée par pulvérisation.

2. Procédé selon la revendication 1, caractérisé en ce que le tétraphénylborate est préparé par une réaction de Grignard et en ce que le traitement de la solution de réaction de Grignard représente une combinaison des étapes de procédé a) à d)

   a) hydrolyse de la solution de réaction de Grignard en présence d'un adjuvant réglant le pH,
   b) purification de la solution d'hydrolyse par adsorption,
   c) échange du solvant organique contre de l'eau et
   d) séchage par pulvérisation de l'extrait aqueux provenant de l'étape c).

**3.** Procédé selon la revendication 2, caractérisé en ce que la purification par adsorption est effectuée par addition d'un agent d'adsorption à la solution d'hydrolyse avant ou après l'hydrolyse, mais avant le séchage par pulvérisation.

**4.** Procédé selon la revendication 2 ou 3, caractérisé en ce qu'un agent d'adsorption est ajouté à la phase aqueuse après l'échange de solvants.

**5.** Procédé selon au moins l'une des revendications 2 à 4, caractérisé en ce que la purification par adsorption est effectuée par addition de charbon actif, de zéolithes, d'oxyde d'aluminium, d'oxydes de silicium à grande surface, de silicates ou d'un mélange des agents d'adsorption cités.

**6.** Procédé selon au moins l'une des revendications 2 à 5, caractérisé en ce qu'après l'échange de solvants c) a lieu une autre addition d'un adjuvant réglant le pH.

**7.** Procédé selon au moins l'une des revendications 2 à 6, caractérisé en ce que l'adjuvant réglant le pH est une base organique ou non organique, de préférence un sel alcalin de l'acide acétique, lactique ou tartrique, un hydroxyde alcalin, un hydroxyde alcalino-terreux, un carbonate alcalin, un carbonate alcalino-terreux, un sel alcalin ou alcalino-terreux d'un phosphate ou d'un phosphate acide ou un mélange d'au moins deux des substances citées.

**8.** Procédé selon au moins l'une des revendications 2 à 7, caractérisé en ce que l'adjuvant réglant le pH est présent en une concentration de 0,1 à 50 % en poids, de préférence de 0,5 à 15 % en poids, en particulier de 1 à 10 % en poids, par rapport au poids du produit d'hydrolyse provenant de la solution de réaction de Grignard, de sorte que la valeur du pH de la solution d'hydrolyse soit comprise entre pH 7 et 11, de préférence 7,5 et 10,5.

**9.** Procédé selon au moins l'une des revendications 2 à 8, caractérisé en ce que l'échange de solvants a lieu au moyen d'une élimination par distillation du solvant, après addition d'eau.

**10.** Procédé selon la revendication 9, caractérisé en ce que l'élimination par distillation du solvant a lieu sous pression réduite et à des températures inférieures à 70°C, de préférence entre 20 et 50°C.

**11.** Procédé selon au moins l'une des revendications 1 à 10, caractérisé en ce que la concentration du tétraphénylborate dans la solution à sécher par pulvérisation est de 1 à 40 % en poids, de préférence de 1 à 25 % en poids.

**12.** Procédé selon au moins l'une des revendications 1 à 11, caractérisé en ce que le tétraphénylborate est isolé sous forme d'un sel soluble dans l'eau, de préférence sous forme de sel de lithium, sodium, magnésium ou chloromagnésium ou d'un mélange des sels cités.

**13.** Composé de formule (I) sous forme solide

$$\overset{\ominus}{B}(\text{phényle})_4\, X^{\oplus} \qquad (I),$$

dans laquelle $X^{\oplus}$ a la signification $Na^{\oplus}$, $Li^{\oplus}$, $Mg^{2+}/2$ ou $MgCl^{+}$, caractérisé en ce que la forme particulaire des particules de matière solide est majoritairement sphérique, ronde ou ovale.